# EUROPEAN PATENT APPLICATION

(11) **EP 2 998 668 A1**
(43) Date of publication of application: **23.03.2016**
(21) Application number: 14192398.7
(22) Date of filing: 08.11.2014
(51) Int. Cl.: F25D 3/11, F25D 29/00, A23B 4/09

(54) **Apparatus and method for applying a heat transfer substance**

(30) Priority: 17.09.2014 US 201462051410 P
(71) Applicant: Linde Aktiengesellschaft, 80331 München (DE)
(72) Inventor: Newman, Michael D., Hillsborough, NJ New Jersey 08844 (US)
(74) Representative: Hofmann, Andreas

(57) **Abstract**

In order to overcome problems that earlier apparatus and methods have experienced, an apparatus (10) for applying a heat transfer substance, in particular comprising a cryogen, for example comprising liquid nitrogen (LIN), to destroy bacteria, in particular comprising campylobacter, on a product (12), in particular selected from the group consisting of a food product, a carcass, or a combination of food products and carcasses, is proposed, said apparatus (10) comprising:
- a housing (16) having an inlet (18), an outlet (22), and a chamber (20) therebetween in communication with the inlet (18) and the outlet (22);
- a conveyor (24) constructed and arranged to transport the product (12) through the chamber (20);
- a heat sensing apparatus (26, 28, 30; 32, 34, 36) responsive to heat parameters of the product (12) at the inlet (18) and the outlet (22) and able to transmit signals of said heat parameters;
- a heat transfer substance spray apparatus (38, 40, 44) in fluid communication with the chamber (20) for providing said heat transfer substance to said chamber (20); and
- a controller (52) connected to the heat sensing apparatus (26, 28, 30; 32, 34, 36) and the heat transfer substance spray apparatus (38, 40, 44) for controlling administration of said heat transfer substance to the chamber (20) and the product (12) in response to the signals from said heat sensing apparatus (26, 28, 30; 32, 34, 36).

A related method of applying a heat transfer substance is also proposed.

## Description

### Technical field of the present invention

The present invention relates to an apparatus and to a method for destroying bacteria, for example campylobacter, on food products or carcasses.

### Technological background of the present invention

In cryogenic treatment for killing campylobacter on a surface of, for example, poultry carcasses, it is important to have a constant and sufficient flow of liquid nitrogen (LIN) to the process for the nozzles to be actively spraying nitrogen onto the carcass surface. The carcass can be of a chicken, for example.

The retention or residence time of the carcass exposed to the process is very short, for example in a range of twenty seconds to forty seconds. Accordingly, a minor disruption of the LIN flow can result in reduced kill rates of the bacteria and inefficient use of the LIN.

It is also necessary to precisely control LIN flow to minimize accumulation of liquid nitrogen on a floor of a treatment tunnel for the carcass. An excess of LIN and overspray can result in damage to the freezing tunnel and equipment including, as mentioned above, a wasteful use of the LIN product.

The only known method of controlling a flow of LIN into the tunnel is by opening a LIN control valve to a set position, and thereby permitting the LIN to flow into the treatment system. There is no feedback control to compensate for variable temperatures of the carcasses passing through the tunnel, or the variable quality of the LIN entering the system. Both of these variables impact upon an effective and efficient use of the LIN in the tunnel, and in the treatment process.

### Disclosure of the present invention: object, solution, advantages

Taking the prior art as discussed into account, an object of the present invention is to overcome problems that earlier apparatus and methods have experienced. This object is accomplished by an apparatus comprising the features of claim 1 as well as by a method comprising the features of claim 13. Advantageous embodiments and expedient improvements of the present invention are disclosed in the respective dependent claims.

The present invention basically provides for an apparatus and for a method for controlling the flow of a heat transfer substance, in particular comprising a cryogen, for example comprising liquid nitrogen (LIN), for bacteria treatment, in particular for campylobacter treatment, on a product, in particular selected from the group consisting of a food product, a carcass, for example a poultry carcass, or a combination of food products and carcasses.

Sensors may be included which directly monitor the flow rate of the products and surface temperatures of the products entering and exiting a chamber or tunnel. This data may be fed into an onboard processor which may automatically adjust the mass flow rate of the heat transfer substance so that products may always be discharged from the system having a select and desired surface temperature, therefore minimizing overspray and wasted heat transfer substance.

In more detail, an apparatus is therefore provided for applying cryogen to destroy bacteria on a food product, including a housing having an inlet, an outlet, and a chamber therebetween in communication with the inlet and the outlet; a conveyor constructed and arranged to transport the food product through the chamber; a heat sensing apparatus responsive to heat parameters of the food product at the inlet and the outlet and able to transmit signals of said heat parameters; a cryogen spray apparatus in fluid communication with the chamber for providing a cryogen substance to said chamber; and a controller connected to the heat sensing apparatus and the cryogen spray apparatus for controlling administration of said cryogen substance to the chamber and the food product in response to the signals from said heat sensing apparatus.

According to an advantageous embodiment of the present invention, the heat sensing apparatus may comprise at least one first sensor, in particular at least one inlet proximity sensor, positioned proximate the inlet and constructed and arranged to signal proximity of said product with respect to said inlet. More particularly, as each of the products approach the inlet, the product may be aligned on a shackle for optimum positioning during treatment within the spray chamber.

According to an expedient embodiment of the present invention, the first sensor at the inlet may be triggered indicating the position of the product for alignment with at least one inlet probe or inlet sensor, in particular with at least one inlet infrared (IR) probe or inlet infrared (IR) sensor, disposed proximate the inlet and responsive to a first heat parameter of said product.

According to a favoured embodiment of the present invention, the heat sensing apparatus may comprise a first thermal imaging camera positioned proximate the inlet and to have the product in a field of vision of said first camera. More particularly, said first thermal imaging camera may have a line of sight to the at least one inlet probe or inlet sensor.

While the first thermal imaging camera reads and provides an overall representation of the temperature distribution on the product, the inlet probe or inlet sensor senses and signals surface temperatures at precise locations on the product. Data from the first thermal imaging camera can be used to estimate an average surface temperature of the product.

According to a preferred embodiment of the present invention, the heat sensing apparatus may comprise at least one second sensor, in particular at least one outlet proximity sensor, positioned proximate the outlet and constructed and arranged to signal proximity of said product with respect to said outlet. More particularly, at a discharge end of the housing at the outlet, said second sensor may be positioned to be triggered when each of the products exits the outlet.

According to an advantageous embodiment of the present invention, the heat sensing apparatus may comprise a further or second thermal imaging camera positioned proximate the outlet and to have the product in a field of vision of said further or second camera. More particularly, said further or second thermal imaging camera may record an outlet temperature of a surface of each product, for example of the skin of a carcass.

According to an expedient embodiment of the present invention, at least one outlet probe or outlet sensor, in particular with at least one second outlet infrared (IR) probe or second outlet infrared (IR) sensor, may be disposed proximate the outlet and may be responsive to a second heat parameter of said product. More particularly, a plurality or array of said outlet probes or outlet sensors may be arranged along a line of sight with respect to the products exiting the outlet.

According to a favoured embodiment of the present invention, the heat transfer substance spray apparatus may comprise a pipe or conduit for providing the heat transfer substance to the chamber. More particularly, the heat transfer substance may be provided to the apparatus from a remote source, in particular from a bulk storage tank, through said pipe or conduit.

According to a preferred embodiment of the present invention, said pipe or conduit may be in fluid communication with a manifold or plenum disposed in the spray chamber. More particularly, a plurality of outlets may be arranged in said manifold or plenum for providing the heat transfer substance into the chamber.

According to an advantageous embodiment of the present invention, at least one branch or pipe may extend from said manifold or plenum. More particularly, the branch or pipe may be disposed in the chamber so that the products which transit the chamber may pass in close proximity to nozzles, in particular to spray nozzles, whereupon atomized sprays of the heat transfer substance can be applied to the surface of the products, for example to the skin of the carcasses.

The branch or pipe may be provided with said at least one nozzle which may be in fluid communication with the pipe or conduit and from which the heat transfer substance may be sprayed into the chamber.

According to an expedient embodiment of the present invention, the pipe or conduit may include a pressure regulator in communication with at least one valve for controlling an amount of the heat transfer substance introduced from the pipe or conduit into the chamber.

According to a favoured embodiment of the present invention, the pipe or conduit may be provided with at least one pressure transducer arranged downstream of the valve such that the pressure transducer may communicate an amount of pressure in the heat transfer substance as it is provided to the branch or pipe.

According to a preferred embodiment of the present invention,
- said pressure regulator may be in communication with the controller for controlling actuation of said valve, and/or
- said pressure transducer may be in communication with the controller for signalling to the controller a pressure of the heat transfer substance in the pipe or conduit.

The controller for the apparatus may monitor and track data being received regarding the products so that the heat transfer substance being introduced into the apparatus can be controlled in an amount sufficient to kill the bacteria on the products, without wasting the heat transfer substance and without freezing the products.

In particular, the controller may be in communication, wirelessly or otherwise, with said inlet probe or inlet sensor, with said outlet probe or outlet sensor, with said first thermal imaging camera, with said second thermal imaging camera, with said pressure regulator, and with said pressure transducer.

A method is also provided for applying cryogen to destroy bacteria on a product, including conveying the product for exposure to a heat transfer substance; sensing a first temperature at a surface of the product before exposure to the heat transfer substance; contacting the product with the heat transfer substance to reduce a surface temperature of the product without freezing said product; sensing a second temperature at the surface of the product after exposure to the heat transfer substance; and controlling an amount of the heat transfer substance contacting the product surface responsive to the first and second temperatures of the surface of the product.

Advantageously, the method may further comprise
- sensing a first proximity of the product for initiating the sensing a first temperature, and
- sensing a second proximity of the product for initiating the sensing a second temperature.

Expediently, the method may further comprise adjusting a pressure of the heat transfer substance responsive to the sensing of the first and second temperatures.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 13; further improvements, features and advantages of the present invention are explained below in more detail with reference to particular and preferred embodiments by way of nonlimiting example and to the appended drawing figures taken in conjunction with the following description of the embodiments, of which:
- FIG. 1: discloses an apparatus embodiment for performing a process embodiment for treating campylobacter or other bacteria at a surface of a product, for example at a surface of a food product or of a carcass; and
- FIG. 2: discloses positioning of certain components of the apparatus of FIG. 1 in relation to a poultry carcass being processed by the apparatus.

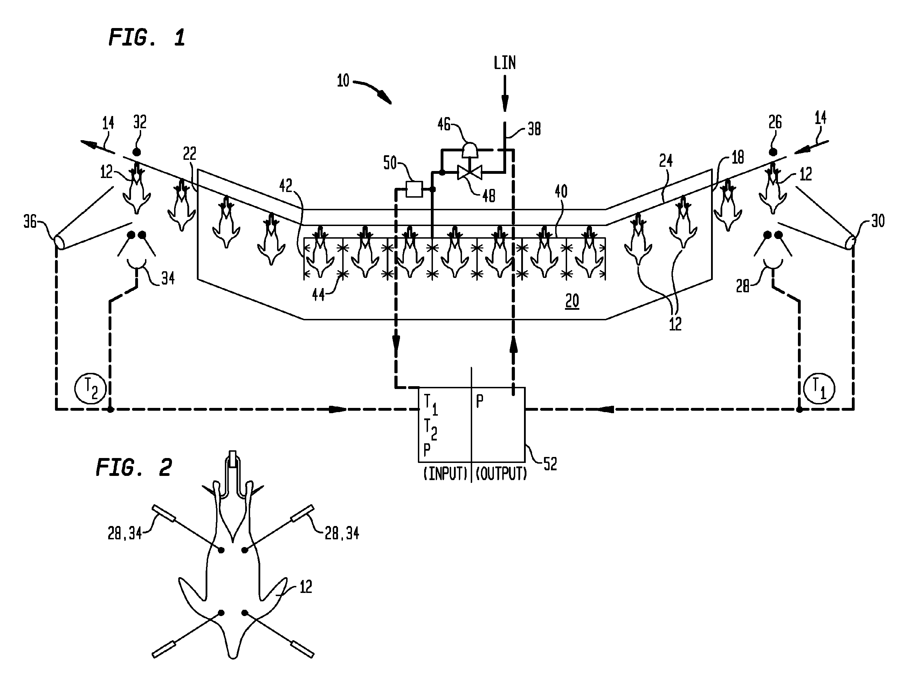

In the appended drawing figures, like equipment is labelled with the same reference numerals throughout the description of FIG. 1 and of FIG. 2.

### Detailed description of the drawings; best way of embodying the present invention

Before explaining the present inventive embodiments in detail, it is to be understood that the embodiments are not limited in their application to the details of construction and arrangement of parts illustrated in the accompanying drawings, since the invention is capable of other embodiments and of being practiced or carried out in various ways. Also, it is to be understood that the phraseology or terminology employed herein is for the purpose of description and not of limitation.

Referring to FIG. 1, there is shown an apparatus 10 constructed for liquid nitrogen (LIN) control for campylobacter treatment of carcasses 12, for example of poultry carcasses. The carcasses 12 are moved through the apparatus 10 in a direction as indicated by arrow 14.

The apparatus 10 is constructed to control an amount of the LIN applied to the plurality of carcasses 12 and to accordingly adjust the flow of the LIN responsive to the temperature and quantity of the carcasses 12 entering and exiting the apparatus. Adjusting the flow of the LIN will control the heat flux at a surface of the carcasses 12 for bringing about a desired result of killing bacteria at a surface of each carcass 12 without freezing same.

In particular, the apparatus 10 includes a housing 16 constructed as a tunnel which is fabricated of stainless steel or other alloy sufficient for purposes of hygiene, maintenance, repair and cleaning of the housing, and withstanding cryogenic temperatures. The housing 16 includes an inlet 18 in fluid communication with a spray chamber 20 at an interior of the housing 16, and an outlet 22 also in fluid communication with the spray chamber 20.

A conveyor 24 having mechanical fasteners, such as shackles, connected thereto is arranged to transit the spray chamber 20 from the inlet 18 through the spray chamber 20 to the outlet 22 while transporting at least one and for most applications a plurality of the carcasses 12 along the spray chamber 20 for processing. The conveyor 24 with its mechanical fasteners for holding the carcasses 12 are those which are known for use in poultry processing operations.

As each of the carcasses 12 approach the inlet 18, the carcass 12 may be aligned on the shackle for optimum positioning during treatment within the spray chamber 20. An inlet proximity sensor 26 at the inlet 18 is triggered indicating the position of the carcass 12 for alignment with at least one and for most applications a plurality of inlet infrared (IR) probes 28 or sensors disposed proximate the inlet 18.

A thermal imaging camera 30 is also disposed proximate the inlet 18, and the camera 30 has a line of sight to the inlet (IR) sensors 28. The IR probes 28 sense and signal surface temperatures at precise locations on the carcass 12, while the thermal imaging camera 30 reads and provides an overall representation of the temperature distribution on the carcass 12.

Data from the thermal imaging camera 30 can be used to estimate an average surface temperature of the carcass 12. Both the IR probes 28 and thermal imaging camera 30 will be used for most applications, but it is understood that the IR probes 28 only can be used, or the camera 30 only can be used.

At a discharge end of the housing 16 at the outlet 22, an outlet proximity sensor 32 is positioned to be triggered when each of the carcasses 12 exits the outlet 22. A plurality or array of outlet IR probes 34 are sensors which are positioned proximate the outlet 22 and arranged along a line of sight with respect to the carcasses 12 exiting the outlet 22. Another thermal imaging camera 36 is positioned proximate the outlet 22 to record an outlet temperature of a surface of each carcass 12, such as the skin of the carcass 12.

FIG. 2 gives an example of the inlet (IR) sensors 28 and of the outlet (IR) sensors 34, respectively positioned for detecting temperature of the skin or the surface of each of the carcasses 12. The sensing, signalling and reading processes of the outlet IR probes 34 and thermal imaging camera 36 are similar to the inlet IR probes 28 and the inlet camera 30.

Application and control of the LIN introduced into the spray chamber 20 is as follows:
LIN is provided to the apparatus 10 from a remote source such as a bulk storage tank (not shown) through a pipe 38 or conduit which is connected to a manifold 40 or plenum disposed in the spray chamber 20.

Extending from the manifold 40 are at least one and for most applications a plurality of branches 42 or pipes, each of which is provided with at least one and for most applications a plurality of spray nozzles 44.

The branches 42 are disposed in the spray chamber 20 so that the carcasses 12 which transit the chamber 20 pass in close proximity to the spray nozzles 44, whereupon atomized sprays of nitrogen gas can be applied to the surface or the skin of the carcasses 12.

The LIN pipe 38 includes a pressure regulator 46 in communication with an inlet valve 48 for controlling an amount of the LIN introduced from the pipe 38 into the spray chamber 20. The pipe 38 is further provided with a pressure transducer 50 arranged downstream of the valve 48 such that the pressure transducer 50 communicates an amount of pressure in the LIN as it is provided to the branches 42.

A controller 52 for the apparatus 10 monitors and tracks data being received regarding the carcasses 12 so that the LIN being introduced into the apparatus 10 can be controlled in an amount sufficient to kill the bacteria on the carcasses 12, without wasting the cryogen product and without freezing the carcasses 12. In particular, the controller 52 is in communication with, wirelessly or otherwise, the IR sensors 28, 34, thermal cameras 30, 36, the pressure regulator 46 and the pressure transducer 50.

The sensors 28, 34 record temperature of each carcass 12 at from, for example, six to eight key or critical locations on the bird. These critical locations on the carcass 12 are where contamination tends to be more likely and where destruction of campylobacter is more difficult. These locations usually include areas of the carcass 12 having thicker muscle mass.

The carcasses 12 then travel through the treatment process, wherein liquid nitrogen is sprayed onto the surface of the carcass 12. It is important to maintain a constant spray on the surface of the carcass 12.

The carcasses 12 then discharge from the treatment process where the array of outlet IR probes 34 and thermal imaging camera 36 record the outlet temperatures of the surface or skin for each carcass 12.

In operation, a temperature T1 is sensed by the inlet IR sensors 28, recorded by the thermal camera 30 and provided to the controller 52. A pressure P is also encoded into the controller 52, the pressure being controllable as necessary for processing of the carcasses 12 with the LIN.

A desired temperature T2 is entered into the controller 52. The temperature T2 could be an overall average temperature of each one of the carcasses 12 or a temperature specific to a location or locations on the carcass 12. For example, a breast area or location of the carcass 12 is usually monitored due to its size and thickness, and for sufficiency of the LIN application process.

The controller 52 then adjusts a line pressure by controlling the pneumatic pressure via a dome of the pressure regulator 46. The controller 52 then adjusts cryogen injection pressure by adjusting a percentage (%) that the valve 48, for example a modulating control valve, is to be open.

That is, if a discharge temperature of each one of the carcasses 12 is too great, the controller 52 will adjust the line pressure of the LIN through pipe 38 to be increased and therefore subsequently lower discharge temperatures of the carcasses 12 to be colder.

Because the outlet IR sensors 34 and outlet thermal camera 36 are connected to the controller 52, and because the controller 52 is also provided with the pressure of the LIN through the line 38 due to the controller 52 being in communication with the pressure transducer 50, the controller 52 can be responsive to regulate the pressure and therefore an amount of the LIN being introduced to the branches 42 and out of the spray nozzles 44 and onto the carcasses 12. Response of the apparatus 10 can be tuned with proportional-integral-derivative (PID) functions.

Occasionally, during bulk tank (not shown) filling, the line 38 pressure of LIN being fed to the apparatus 10 may change. The controller 52 of the apparatus 10 will adjust the flow of cryogen accordingly to compensate for the filling. In addition, the quality (cooling capacity) of the LIN can also change during the course of a production day. The controller 52 will also compensate for such a change.

The present apparatus 10 and method embodiments provide for a precise amount of LIN to be applied to the carcass 12 such that a skin temperature of the carcass 12 is at a proper reading upon outlet 22 from the apparatus 10.

There is also provided a reduction in overspraying of the LIN, because overspraying can damage or compromise the treatment equipment and related process. This accordingly results in an improved efficiency of the bacteria destruction process, in particular of the campylobacter destruction process, in view of the reduced and therefore efficient usage of the LIN.

Similarly, because the apparatus 10 and related process are operating more efficiently, there is therefore provided a reduction in the amount of operator intervention to cure or correct operation of the apparatus 10 and implementation of the related process.

It will be understood that the embodiments described herein are merely exemplary and that a person skilled in the art may make many variations and modifications without departing from the spirit and scope of the inventive embodiments. All such variations and modifications are intended to be included within the scope of the inventive embodiments as defined in the appended claims. It should be understood that the embodiments described above are not only in the alternative, but may be combined.

### List of reference numerals

- 10: apparatus, in particular freezer apparatus
- 12: product, in particular food product or carcass, for example poultry carcass, such as chicken carcass
- 14: direction of movement
- 16: housing, in particular tunnel
- 18: inlet
- 20: spray chamber
- 22: outlet
- 24: conveyor, in particular with mechanical fastener
- 26: first sensor, in particular first proximity sensor, for example inlet proximity sensor
- 28: first probe or first sensor, in particular inlet infrared (IR) probe or inlet infrared (IR) sensor
- 30: first thermal imaging camera
- 32: further or second sensor, in particular further or second proximity sensor, for example outlet proximity sensor
- 34: further or second probe or further or second sensor, in particular outlet infrared (IR) probe or outlet infrared (IR) sensor
- 36: further or second thermal imaging camera
- 38: conduit or line or pipe, in particular liquid nitrogen (LIN) conduit or liquid nitrogen (LIN) line or liquid nitrogen (LIN) pipe
- 40: manifold or plenum in spray chamber 20
- 42: branch or pipe
- 44: nozzle, in particular spray nozzle
- 46: pressure regulator
- 48: valve, in particular inlet valve, for example modulating control valve
- 50: pressure transducer
- 52: controller
- P: pressure
- T1: factual temperature
- T2: desired temperature

## Claims

1. An apparatus (10) for applying a heat transfer substance, in particular comprising a cryogen, for example comprising liquid nitrogen (LIN), to destroy bacteria, in particular comprising campylobacter, on a product (12), in particular selected from the group consisting of a food product, a carcass, or a combination of food products and carcasses, said apparatus (10) comprising:
- a housing (16) having an inlet (18), an outlet (22), and a chamber (20) therebetween in communication with the inlet (18) and the outlet (22);
- a conveyor (24) constructed and arranged to transport the product (12) through the chamber (20);
- a heat sensing apparatus (26, 28, 30; 32, 34, 36) responsive to heat parameters of the product (12) at the inlet (18) and the outlet (22) and able to transmit signals of said heat parameters;
- a heat transfer substance spray apparatus (38, 40, 44) in fluid communication with the chamber (20) for providing said heat transfer substance to said chamber (20); and
- a controller (52) connected to the heat sensing apparatus (26, 28, 30; 32, 34, 36) and the heat transfer substance spray apparatus (38, 40, 44) for controlling administration of said heat transfer substance to the chamber (20) and the product (12) in response to the signals from said heat sensing apparatus (26, 28, 30; 32, 34, 36).

2. The apparatus according to claim 1, wherein the heat sensing apparatus (26, 28, 30; 32, 34, 36) comprises a first sensor (26) positioned proximate the inlet (18) and constructed and arranged to signal proximity of said product (12) with respect to said inlet (18).

3. The apparatus according to claim 1 or 2, wherein the heat sensing apparatus (26, 28, 30; 32, 34, 36) comprises a first thermal imaging camera (30) positioned proximate the inlet (18) and to have the product (12) in a field of vision of said first camera (30).

4. The apparatus according to at least one of claims 1 to 3, further comprising at least one first, in particular infrared (IR), probe (28) positioned proximate the inlet (18) and responsive to a first heat parameter of said product (12).

5. The apparatus according to at least one of claims 1 to 4, wherein the heat sensing apparatus (26, 28, 30; 32, 34, 36) comprises a second sensor (32) positioned proximate the outlet (22) and constructed and arranged to signal proximity of said product (12) with respect to said outlet (22).

6. The apparatus according to at least one of claims 1 to 5, wherein the heat sensing apparatus (26, 28, 30; 32, 34, 36) comprises a second thermal imaging camera (36) positioned proximate the outlet (22) and to have the product (12) in a field of vision of said second camera (36).

7. The apparatus according to at least one of claims 1 to 6, further comprising at least one second, in particular infrared (IR), probe (34) positioned proximate the outlet (22) and responsive to a second heat parameter of said product (12).

8. The apparatus according to at least one of claims 1 to 7, wherein the heat transfer substance spray apparatus (38, 40, 44) comprises a pipe (38) for providing the heat transfer substance to the chamber (20).

9. The apparatus according to claim 8, wherein the heat transfer substance spray apparatus (38, 40, 44) further comprises at least one nozzle (44) in fluid communication with the pipe (38) and from which the heat transfer substance is sprayed into the chamber (20).

10. The apparatus according to claim 8 or 9, further comprising:
- a valve (48) disposed in the pipe (38),
- a pressure regulator (46) in communication with the valve (48) and with the controller (52) for controlling actuation of said valve (48), and
- a pressure transducer (50) in fluid communication with the pipe (38) downstream of the valve (48), and in communication with said controller (52) for signalling to the controller (52) a pressure of the heat transfer substance in the pipe (38).

11. The apparatus according to at least one of claims 8 to 10, further comprising a manifold (40) in fluid communication with the pipe (38).

12. The apparatus according to claim 11, further comprising a plurality of outlets arranged in said manifold (40) for providing the heat transfer substance into the chamber (20).

13. A method of applying a heat transfer substance, in particular comprising a cryogen, for example comprising liquid nitrogen (LIN), to destroy bacteria, in particular comprising campylobacter, on a product (12), in particular selected from the group consisting of a food product, a carcass, or a combination of food products and carcasses, said method comprising:
- conveying (24) the product (12) for exposure to the heat transfer substance;
- sensing (28) a first temperature at a surface of the product (12) before exposure to the heat transfer substance;
- contacting the product (12) with the heat transfer substance to reduce a surface temperature of the product (12) without freezing said product (12);
- sensing (34) a second temperature at the surface of the product (12) after exposure to the heat transfer substance; and
- controlling (52) an amount of the heat transfer substance contacting the surface of the product (12) responsive to the first and second temperatures of the surface of the product (12).

14. The method according to claim 13, further comprising
- sensing (26) a first proximity of the product (12) for initiating the sensing (28) a first temperature, and
- sensing (32) a second proximity of the product (12) for initiating the sensing a second temperature.

15. The method according to claim 13 or 14, further comprising adjusting a pressure of the heat transfer substance responsive to the sensing (28, 34) of the first and second temperatures.
